# EUROPÄISCHE PATENTANMELDUNG

(11) **EP 3 786 492 A1**
(43) Veröffentlichungstag der Anmeldung: **03.03.2021**
(21) Anmeldenummer: 20192817.3
(22) Anmeldetag: 26.08.2020
(51) Int. Cl.: F16H 61/04, F16H 61/70

(54) **VERFAHREN ZUM SCHALTEN EINES GETRIEBES AUS EINER ERSTEN ÜBERSETZUNGSSTUFE IN EINE ZWEITE ÜBERSETZUNGSSTUFE UNTER DREHZAHL, ANTRIEBSSTRANG UND ALLRADGETRIEBENES FAHRZEUG**

(30) Priorität: 02.09.2019 DE 102019213230
(71) Anmelder: ZF Friedrichshafen AG, 88046 Friedrichshafen (DE)
(72) Erfinder: Reitinger, Franz, 4092 Esternberg (AT); Mühlbauer, Alexander, 94575 Windorf (DE)

(57) **Zusammenfassung**

Die Erfindung betrifft ein Verfahren zum Schalten eines Getriebes (3) aus einer ersten Übersetzungsstufe (3') in eine zweite Übersetzungsstufe (3") unter Drehzahl, wobei das Getriebe (3) von einem Antriebsaggregat (2) mit einer Eingangsdrehzahl beaufschlagt wird, wobei das Getriebe (3) nach Maßgabe der Eingangsdrehzahl und einer eingestellten Übersetzungsstufe (3', 3") eine Ausgangsdrehzahl ausgibt, wobei ein Drehmoment des Antriebsaggregats (2) zum Schalten reduziert wird, wobei das Getriebe (3) dann aus einer ersten Übersetzungsstufe (3') in eine Neutralposition (3"') geschaltet wird, wobei weiterhin eine Synchronisation der Eingangsdrehzahl mit der Ausgangsdrehzahl der zweiten Übersetzungsstufe (3") vorgenommen wird und wobei das Getriebe (3) schließlich aus der Neutralposition (3"') in die zweite Übersetzungsstufe (3") geschaltet wird, wenn die Eingangsdrehzahl mit der Ausgangsdrehzahl der zweiten Übersetzungsstufe (3") synchronisiert ist. Das erfindungsgemäße Verfahren zeichnet sich dadurch aus, dass die Synchronisation ausschließlich über das Antriebsaggregat (2) erfolgt. Die Erfindung betrifft weiterhin einen entsprechenden Antriebsstrang (1) sowie ein allradgetriebenes Fahrzeug.

## Beschreibung

Die vorliegende Erfindung betrifft ein Verfahren zum Schalten eines Getriebes aus einer ersten Übersetzungsstufe in eine zweite Übersetzungsstufe unter Drehzahl gemäß dem Oberbegriff von Anspruch 1, einen entsprechenden Antriebsstrang sowie ein entsprechendes allradgetriebenes Fahrzeug.

Im Stand der Technik ist es bekannt, zur Erhöhung der Spreizung eines als Hauptgetriebe verwendeten Schaltgetriebes dem Schaltgetriebe ein klauengeschaltetes, nicht synchronisiertes Verteilergetriebe nachzuschalten. Das Verteilergetriebe kann z.B. zweistufig mit einer als Straßengang ausgebildeten Übersetzungsstufe und einer als Geländegang ausgebildeten Untersetzungsstufe ausgeführt sein.

In diesem Zusammenhang beschreibt die WO 2010/006872 A1 ein Verfahren zum Steuern eines Antriebsstrangs eines Fahrzeugs mit einem Antriebsmotor, einem Hauptgetriebe sowie mit einem Verteilergetriebe, bei welchem automatisiert eine Schaltung im Verteilergetriebe während der Fahrt durchgeführt werden kann. Dazu wird der Antriebsstrang vom Hauptgetriebe getrennt, das Verteilergetriebe wird umgeschaltet und im Hauptgetriebe wieder der passende Gang eingelegt. Dieser Vorgang ist zwangsläufig mit einer Unterbrechung der Zugkraft verbunden, da das Schalten der Übersetzungsstufe oder der Untersetzungsstufe im Verteilergetriebe sonst nicht möglich ist.

Aus der DE 10 2010 030 242 A1 ist weiterhin ein Verfahren zum Schalten zumindest einer Übersetzungsstufe und/oder zumindest einer Untersetzungsstufe bei einem klauengeschalteten Verteilergetriebe in einem Antriebsstrang eines Fahrzeuges mit einem Antriebsmotor und einem lastschaltbaren Schaltgetriebe, insbesondere einem Automatgetriebe, bekannt. Das Verteilergetriebe wird dabei in die Neutralposition bzw. nach Neutral geschaltet und nach der Synchronisierung wird die Übersetzungsstufe oder die Untersetzungsstufe im Verteilergetriebe geschaltet. Während der Synchronisierung wird das Schaltgetriebe durch Ansteuerung zumindest eines zusätzlichen Schaltelements zeitweise verspannt oder beschleunigt, so dass die Ausgangsdrehzahl des Schaltgetriebes an die Ausgangsdrehzahl des Verteilergetriebes multipliziert mit der Zielübersetzung im Verteilergetriebe möglichst schnell angeglichen wird.

Die bekannten Verfahren zum Schalten von Verteilergetrieben unter Fahrt sind jedoch dahingehend nachteilbehaftet, als dass sie aufgrund der notwendigen zusätzlichen Ansteuerung des Hauptgetriebes sowie der Trägheit es Verbrennungsmotors vergleichsweise hohe Schaltzeiten aufweisen.

Es ist eine Aufgabe der Erfindung, ein verbessertes Verfahren zum Schalten eines Getriebes aus einer ersten Übersetzungsstufe in eine zweite Übersetzungsstufe unter Drehzahl vorzuschlagen.

Diese Aufgabe wird erfindungsgemäß durch das Verfahren zum Schalten eines Getriebes aus einer ersten Übersetzungsstufe in eine zweite Übersetzungsstufe unter Drehzahl gemäß Anspruch 1 gelöst. Vorteilhafte Ausgestaltungen und Weiterbildungen der Erfindung gehen aus den abhängigen Ansprüchen hervor.

Die Erfindung betrifft ein Verfahren zum Schalten eines Getriebes aus einer ersten Übersetzungsstufe in eine zweite Übersetzungsstufe unter Drehzahl, wobei das Getriebe von einem Antriebsaggregat mit einer Eingangsdrehzahl beaufschlagt wird, wobei das Getriebe nach Maßgabe der Eingangsdrehzahl und einer eingestellten Übersetzungsstufe eine Ausgangsdrehzahl ausgibt, wobei ein Drehmoment des Antriebsaggregats zum Schalten reduziert wird, wobei das Getriebe dann aus einer ersten Übersetzungsstufe in eine Neutralposition geschaltet wird, wobei weiterhin eine Synchronisation der Eingangsdrehzahl mit der Ausgangsdrehzahl der zweiten Übersetzungsstufe vorgenommen wird und wobei das Getriebe schließlich aus der Neutralposition in die zweite Übersetzungsstufe geschaltet wird, wenn die Eingangsdrehzahl mit der Ausgangsdrehzahl der zweiten Übersetzungsstufe synchronisiert ist. Das erfindungsgemäße Verfahren zeichnet sich dadurch aus, dass die Synchronisation ausschließlich über das Antriebsaggregat erfolgt.

Erfindungsgemäß ist es also vorgesehen, ein Getriebe mit mindestens zwei schaltbaren Übersetzungsstufen unter Drehzahl zu schalten, d.h. im Betrieb und nicht im Stillstand zu schalten, wobei sich die Begriffe "Drehzahl", Betrieb" und "Stillstand" auf Zustand des Getriebes beziehen und nicht auf einen Zustand von beispielsweise Fahrzeugrädern eines Fahrzeugs, welches das Getriebe umfasst. Die Drehzahl des Getriebes wird dabei von einem Antriebsaggregat erzeugt, mit welchem das Getriebe über die Eingangswelle trieblich gekoppelt ist, zur Übertragung eines Drehmoments und einer Drehzahl. Die Eingangswelle des Getriebes kann dabei unmittelbar mit einer Abtriebswelle des Antriebsaggregats gekoppelt sein oder mittelbar über eine oder mehrere vorgeschaltete Übersetzungsstufen mit der Abtriebswelle des Antriebsaggregats gekoppelt sein. Die Eingangsdrehzahl des Getriebes entspricht der Drehzahl der Eingangswelle des Getriebes. Das Getriebe wandelt je nach geschalteter Übersetzungsstufe die Eingangsdrehzahl und gibt diese als Ausgangsdrehzahl über eine Ausgangswelle des Getriebes wieder aus. Ebenso wird auch ein Eingangsdrehmoment gewandelt und als Ausgangsdrehmoment über die Ausgangswelle wieder ausgegeben. Die Ausgangswelle des Getriebes kann dabei unmittelbar mit einer Radwelle des Fahrzeugs gekoppelt sein oder mittelbar über eine oder mehrere zwischengeschaltete Übersetzungsstufen mit der Radwelle des Fahrzeugs gekoppelt sein. Beim Schalten des Getriebes aus einer ersten Übersetzungsstufe in eine zweite Übersetzungsstufe unter Drehzahl ändert sich das durch die Übersetzungsstufe vorgegebene Verhältnis von Eingangsdrehzahl zu Ausgangsdrehzahl, so dass die im Getriebe zu schaltenden Elemente, beispielsweise zwei Kupplungshälften, hinsichtlich ihrer Drehzahl beim Schalten in die zweite Übersetzungsstufe synchronisiert werden müssen. Dazu wird zunächst ein Drehmoment des Antriebsaggregats reduziert, so dass vom Antriebsaggregat im Wesentlichen kein Drehmoment mehr in das Getriebe eingebracht wird. Im nächsten Schritt des erfindungsgemäßen Verfahrens wird das Getriebe nun aus der ersten Übersetzungsstufe in die Neutralposition geschaltet. Die Neutralposition stellt dabei einen Leerlauf dar, in welchem das Getriebe weder Drehmoment noch Drehzahlen übertragen kann, beispielsweise aufgrund einer geöffneten Kupplung. In dieser Neutralposition erfolgt nun die Synchronisation der Eingangsdrehzahl mit der neuen Ausgangsdrehzahl, also mit der Ausgangsdrehzahl der zweiten Übersetzungsstufe, in der Form, dass die Eingangsdrehzahl erhöht oder reduziert wird bis sie der Ausgangsdrehzahl der zweiten Übersetzungsstufe unter Berücksichtigung des Übersetzungsverhältnisses der zweiten Übersetzungsstufe entspricht. Die Synchronisation erfolgt dabei erfindungsgemäß ausschließlich über das Antriebsaggregat, d.h. also, dass eine ggf. erforderliche Erhöhung der Eingangsdrehzahl ebenso wie eine ggf. erforderliche Reduzierung der Eingangsdrehzahl ausschließlich über das Antriebsaggregat erfolgt. Beispielsweise kann das Antriebsaggregat mittels eines entsprechend gerichteten Drehmoments auf die Eingangswelle des Getriebes im Sinne einer Drehzahlerhöhung bzw. im Sinne einer Drehzahlreduzierung wirken. Es ist dabei unerheblich, ob die erste Übersetzungsstufe oder die zweite Übersetzungsstufe die "höhere" bzw. "niedrigere" Gangstufe ist, also ein vergleichsweise größeres oder kleineres Übersetzungsverhältnis aufweist. Ebenso müssen die erste und die zweite Übersetzungsstufe nicht die einzigen Übersetzungsstufen des Getriebes sein oder auch nur benachbarte Übersetzungsstufen im Getriebe sein. Sobald die Synchronisation der Eingangsdrehzahl mit der Ausgangsdrehzahl der zweiten Übersetzungsstufe unter Berücksichtigung des Übersetzungsverhältnisses der zweiten Übersetzungsstufe erfolgt ist, wird die zweite Übersetzungsstufe geschaltet.

Indem die Synchronisation erfindungsgemäß ausschließlich über das Antriebsaggregat erfolgt, kann das Getriebe vergleichsweise einfach aufgebaut sein, da beispielsweise keine Reibelemente zu Herstellung der Synchronisation durch Reibung benötigt werden. Dies wiederum reduziert die Kosten wie auch das Gewicht des Getriebes und vermeidet zusätzlichen Verschleiß. Zudem ermöglich das erfindungsgemäße Verfahren die Synchronisation ohne eine nachteilige Beeinflussung der Ausgangsdrehzahl, wie es bei einer über Reibung erfolgenden Synchronisation oftmals üblich ist. Da bei einer über Reibung erfolgenden Synchronisation auch die Ausgangsdrehzahl ein Stück weit der eigentlich zu synchronisierenden Eingangsdrehzahl angepasst wird, kann z.B. ein Fahrer eines Fahrzeugs den Synchronisationsvorgang oftmals unerwünscht wahrnehmen. Das erfindungsgemäße Verfahren hingegen ermöglicht die Synchronisation ohne Beeinflussung der Ausgangsdrehzahl. Die zweite Übersetzungsstufe wird erfindungsgemäß erst dann geschaltet, wenn die Synchronisation abgeschlossen ist. Zudem kann vorteilhaft darauf verzichtet werden, die zum Schalten in die zweite Übersetzungsstufe erforderliche Synchronisation in einem dem Getriebe vorgeschalteten weiteren Getriebe bzw. Schaltstufe durchzuführen. Dies führt auch zu kürzeren Schaltzeiten, da lediglich das Getriebe, in welchem der Schaltvorgang ausgeführt wird, angesteuert werden muss.

Bevorzugt ist es vorgesehen, dass das Verfahren in einem Antriebsstrang eines Fahrzeugs ausgeführt wird, insbesondere im Antriebsstrang eines Nutzfahrzeugs wie z.B. eines allradgetriebenen Baustellenfahrzeugs.

Weiterhin ist es bevorzugt, dass das Schalten zwar unter Drehzahl, jedoch im lastlosen Zustand erfolgt. D.h., dass das Getriebe beim Schalten eine Eingangsdrehzahl und eine Ausgangsdrehzahl aufweist, jedoch im Wesentlichen kein Drehmoment übertragen wird, soweit es nicht ggf. zum Ausgleichen von Reibungsverlusten des Getriebes oder zum Synchronisieren der Eingangsdrehzahl mit der Ausgangsdrehzahl der zweiten Übersetzungsstufe unter Berücksichtigung des Übersetzungsverhältnisses der zweiten Übersetzungsstufe erforderlich ist.

Gemäß einer bevorzugten Ausführungsform der Erfindung ist es vorgesehen, dass das Schalten in einem Zugbetrieb oder in einem Schubbetrieb vorgenommen wird. Zum Schalten wird der Zugbetrieb bzw. der Schubbettrieb kurzfristig unterbrochen, da das Getriebe in einen Neutralzustand geschaltet wird und die Drehzahlsynchronisation erfolgt. Die Schaltdauer des erfindungsgemäßen Verfahrens ist jedoch derart kurz, nämlich im Bereich von weniger als 0,5 s, dass das Verfahren auch problemlos in einem Zugbetrieb oder in einem Schubbetrieb vorgenommen werden kann.

Gemäß einer weiteren bevorzugten Ausführungsform der Erfindung ist es vorgesehen, dass das Antriebsaggregat elektrisch betrieben wird. Bei einem elektrisch betriebenen Antriebsaggregat handelt es sich im Sinne der Erfindung um einen Elektromotor. Daraus ergibt sich der Vorteil, dass die Synchronisation vergleichsweise einfach und schnell erfolgen kann, da ein Elektromotor üblicherweise vergleichsweise schnelle und sehr gut regelbare Drehzahländerungen erlaubt. Zudem kann ein Elektromotor schnelle Drehzahländerungen insbesondere nicht nur im Sinne einer Erhöhung der Drehzahl, sondern ebenso auch im Sinne einer Reduzierung der Drehzahl bereitstellen. Weitere Vorteile eines Elektromotors sind sein bereits aus dem Stillstand heraus sehr hohes bereitstellbares Drehmoment, seine Geräuscharmut sowie seine Emissionslosigkeit. Zudem bietet ein Elektromotor aufgrund seines hohen Wirkungsgrads und der Möglichkeit der Rekuperation im Generatorbetrieb des Elektromotors eine hohe Energieeffizienz.

Gemäß einer weiteren bevorzugten Ausführungsform der Erfindung ist es vorgesehen, dass die Eingangsdrehzahl mittels einer Untersetzungsstufe reduziert wird, bevor das Getriebe mit der Eingangsdrehzahl beaufschlagt wird. Dies begünstigt insbesondere die Verwendung von vergleichsweise kompakten, aber schnelldrehenden Elektromotoren. Derartige Elektromotoren benötigen aufgrund ihrer kompakten Ausbildungsweise entsprechend weniger Bauraum und weisen ein vergleichsweise geringeres Gewicht auf. Zudem sind sie kostengünstiger.

Gemäß einer weiteren bevorzugten Ausführungsform der Erfindung ist es vorgesehen, dass die Eingangsdrehzahl mittels einer mehrstufigen Schaltstufe erhöht oder reduziert wird, bevor das Getriebe mit der Eingangsdrehzahl beaufschlagt wird. Daraus ergibt sich der Vorteil, dass eine vergleichsweise weitere Spreizung des Ausgangsdrehzahlen und der Ausgangsdrehmomente bereitgestellt werden kann. Zudem ermöglicht eine vorgeschaltete, mehrstufige Schaltstufe durch einen Schaltvorgang innerhalb der mehrstufigen Schaltstufe bereits ein Versetzen der Eingangsdrehzahl in einen Drehzahlbereich, welcher in der Nähe der durch die Synchronisation einzustellenden Eingangsdrehzahl liegt. Dadurch kann die eigentliche und ausschließlich vom Antriebsaggregat durchgeführte Synchronisation vereinfacht und weiter beschleunigt werden.

Gemäß einer besonders bevorzugten Ausführungsform der Erfindung ist es vorgesehen, dass das Getriebe in Verbindung mit der Schaltstufe als Gruppengetriebe verwendet wird, wobei die Schaltstufe als Hauptgetriebe verwendet wird. Somit kann das Getriebe vorteilhaft dazu verwendet werden, verschiedene Fahrbereiche vorzugeben, wie etwa Off-Road, Arbeitsbetrieb oder Straßenfahrt, während die Schaltstufe eine Abstufung von Ausgangsdrehzahl und Ausgangsdrehmoment innerhalb des jeweils gewählten Fahrbereichs ermöglicht.

Bevorzugt weist das Getriebe nicht mehr als drei Übersetzungsstufen auf, insbesondere nicht mehr als zwei Übersetzungsstufen.

Gemäß einer weiteren bevorzugten Ausführungsform der Erfindung ist es vorgesehen, dass das Drehmoment des Antriebsaggregats soweit reduziert wird, dass es einem Schleppmoment des Antriebsaggregats und/oder einem Schleppmoment der Untersetzungsstufe und/oder einem Schleppmoment der Schaltstufe sowie einem zur Synchronisation erforderlichen Drehmoment entspricht. Daraus ergibt sich der Vorteil, dass die Eingangsdrehzahl konstant gehalten wird bzw. lediglich im Rahmen der Synchronisation erhöht bzw. reduziert wird. Insbesondere wird aber kein Drehmoment auf die Ausgangswelle übertragen. Die am Schaltvorgang beteiligten Getriebeelemente, z.B. zwei Kupplungshälften, sind also drehmomentlos zueinander und können problemlos geöffnet bzw. geschlossen werden.

Gemäß einer weiteren bevorzugten Ausführungsform der Erfindung ist es vorgesehen, dass das Getriebe mittels einer Schaltklaue geschaltet wird. Schaltklauen ermöglichen eine sichere und zuverlässige Übertragung von Drehmoment und sind vergleichsweise kostengünstig in der Herstellung. Da sie andererseits jedoch keine Drehzahlsynchronisation ermöglichen und unter Drehzahl bzw. unter Last nicht geschaltet werden können, führt das erfindungsgemäße Verfahren hier zu dem zusätzlichen Vorteil, dass ein Schalten unter Drehzahl bzw. unter Last dennoch ermöglicht wird.

Die Erfindung betrifft auch einen Antriebsstrang für ein allradgetriebenes Fahrzeug, umfassend ein als Elektromotor ausgebildetes Antriebsaggregat und mindestens ein Getriebe mit mindestens einer ersten Übersetzungsstufe, einer zweiten Übersetzungsstufe und einer Neutralposition. Der erfindungsgemäße Antriebsstrang zeichnet sich dadurch aus, dass der Antriebsstrang dazu ausgebildet ist, das erfindungsgemäße Verfahren auszuführen. Damit ergeben sich die im Zusammenhang mit dem erfindungsgemäßen Verfahren bereits genannten Vorteile auch für den erfindungsgemäßen Antriebsstrang.

Gemäß einer bevorzugten Ausführungsform der Erfindung ist es vorgesehen, dass das mindestens eine Getriebe als Verteilergetriebe oder Achsgetriebe ausgebildet ist. Gerade Verteilergetriebe oder Achsgetriebe werden oftmals mit vergleichsweise kostengünstigen Schaltklauen ausgestattet. Durch das erfindungsgemäße Verfahren können diese Verteilergetriebe und Achsgetriebe auch unter Drehzahl bzw. unter Last geschaltet werden.

Die Erfindung betrifft weiterhin ein allradgetriebenes Fahrzeug, umfassend einen erfindungsgemäßen Antriebsstrang. Damit ergeben sich die im Zusammenhang mit dem erfindungsgemäßen Antriebsstrang bereits genannten Vorteile auch für das erfindungsgemäße allradgetriebene Fahrzeug.

Nachfolgend wird die Erfindung anhand von in den Figuren dargestellten Ausführungsformen beispielhaft erläutert.

Es zeigen:
- Fig. 1: beispielhaft und schematisch einen Ausschnitt einer möglichen Ausbildungsform eines erfindungsgemäßen Antriebsstrangs für ein allradgetriebenes Fahrzeug,
- Fig. 2: beispielhaft und schematisch einen Ausschnitt einer weiteren möglichen Ausbildungsform eines erfindungsgemäßen Antriebsstrangs für ein allradgetriebenes Fahrzeug
- Fig. 3: beispielhaft und schematisch einen Ausschnitt einer weiteren möglichen Ausbildungsform eines erfindungsgemäßen Antriebsstrangs für ein allradgetriebenes Fahrzeug und
- Fig. 4: beispielhaft und schematisch einen Ausschnitt einer weiteren möglichen Ausbildungsform eines erfindungsgemäßen Antriebsstrangs für ein allradgetriebenes Fahrzeug.

Gleiche Gegenstände, Funktionseinheiten und vergleichbare Komponenten sind figurenübergreifend mit den gleichen Bezugszeichen bezeichnet. Diese Gegenstände, Funktionseinheiten und vergleichbaren Komponenten sind hinsichtlich ihrer technischen Merkmale identisch ausgeführt, sofern sich aus der Beschreibung nicht explizit oder implizit etwas anderes ergibt.

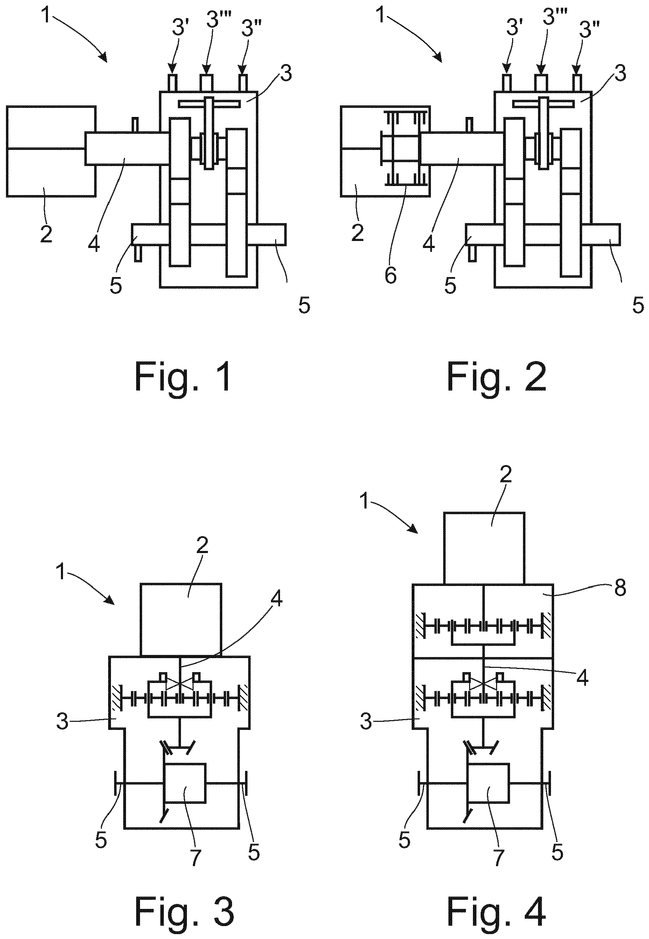

Fig. 1 zeigt beispielhaft und schematisch einen Ausschnitt einer möglichen Ausbildungsform eines erfindungsgemäßen Antriebsstrangs 1 für ein allradgetriebenes Fahrzeug (nicht dargestellt in Fig. 1). Der in Fig. 1 gezeigte Ausschnitt des Antriebsstrangs 1 umfasst ein als Elektromotor 2 ausgebildetes Antriebsaggregat 2 sowie ein als Verteilergetriebe 3 ausgebildetes Getriebe 3. Das Getriebe 3 und das Antriebsaggregat 2 sind über eine Eingangswelle 4 trieblich miteinander verbunden. Beispielsgemäß verbindet die Eingangswelle 4 das Getriebe 3 und das Antriebsaggregat 2 unmittelbar miteinander, d.h. ohne Zwischenschaltung einer weiteren Übersetzungsstufe. Eine Ausgangsdrehzahl des Antriebsaggregats 2 entspricht somit einer Eingangsdrehzahl des Getriebes 3. Das beispielsgemäß als Verteilergetriebe 3 ausgebildete Getriebe 3 umfasst gemäß dem Ausführungsbeispiel der Fig. 1 eine erste Übersetzungsstufe 3', eine zweite Übersetzungsstufe 3" sowie eine Neutralposition 3"'. Das Getriebe 3 gibt über eine Ausgangswelle 5 nach Maßgabe der Eingangsdrehzahl und einer eingestellten Übersetzungsstufe 3', 3" eine Ausgangsdrehzahl aus. Bei einem Schaltvorgang aus der ersten Übersetzungsstufe 3' in die zweite Übersetzungsstufe 3" unter Drehzahl, d.h. bei Vorliegen einer Eingangsdrehzahl, wird nun zunächst ein Drehmoment des Antriebsaggregats 2 zum Getriebe 3 reduziert. Das Drehmoment des Antriebsaggregats 2 wird dabei beispielsgemäß soweit reduziert, dass es einem Schleppmoment des Antriebsaggregats 2 entspricht. Somit bleibt die Drehzahl des Antriebsaggregats 2 konstant. Als nächstes wird das Getriebe 3 dann aus der ersten Übersetzungsstufe 3' in die Neutralposition 3'" geschaltet. Während sich das Getriebe 3 in der Neutralposition 3'" befindet, wird eine Synchronisation der Eingangsdrehzahl mit der Ausgangsdrehzahl der zweiten Übersetzungsstufe 3" vorgenommen, wobei die Synchronisation ausschließlich über das Antriebsaggregat 2 erfolgt, d.h., dass sowohl eine Erhöhung der Eingangsdrehzahl als auch eine Reduzierung der Eingangsdrehzahl über das Antriebsaggregat 2 erfolgen. Dazu wird das Antriebsaggregat 2 bzw. der Elektromotor 2 entsprechend bestromt und infolge ein entsprechendes zusätzliches Drehmoment erzeugt. Das Drehmoment des Antriebsaggregats 2 wird beispielsgemäß nun soweit angepasst, dass es einem Schleppmoment des Antriebsaggregats 2 und zusätzlich auch einem zur Synchronisation erforderlichen Drehmoment entspricht. Schließlich wird das Getriebe 3 aus der Neutralposition 3'" in die zweite Übersetzungsstufe 3" geschaltet, sobald die Eingangsdrehzahl mit der Ausgangsdrehzahl der zweiten Übersetzungsstufe 3"unter Berücksichtigung des Übersetzungsverhältnisses der zweiten Übersetzungsstufe synchronisiert ist. Damit ist der Schaltvorgang abgeschlossen.

Fig. 2 zeigt beispielhaft und schematisch einen Ausschnitt einer weiteren möglichen Ausbildungsform eines erfindungsgemäßen Antriebsstrangs 1 für ein allradgetriebenes Fahrzeug (nicht dargestellt in Fig. 2). Der in Fig. 2 gezeigte Ausschnitt des Antriebsstrangs 1 unterscheidet sich dabei vom in Fig. 1 gezeigten Ausschnitt durch die mehrstufige Schaltstufe 6, mittels der die Eingangsdrehzahl erhöht bzw. reduziert werden kann. Das Antriebsaggregat 2 und das Getriebe 3 sind dementsprechend mittelbar über die Schaltstufe 6 und die Eingangswelle 4 miteinander verbunden. Die Schaltstufe 6 umfasst beispielsgemäß drei Übersetzungsstufen und ist in ein Gehäuse des Elektromotors 2 aufgenommen, d.h., der Elektromotor 2 und die Schaltstufe 6 weisen ein gemeinsames Gehäuse auf und stellen entsprechend eine gemeinsame Baugruppe dar. Dadurch wird es möglich, das Getriebe 2 in Verbindung mit der Schaltstufe 6 als Gruppengetriebe zu verwenden, wobei die Schaltstufe 6 als Hauptgetriebe verwendet werden kann.

Fig. 3 zeigt beispielhaft und schematisch einen Ausschnitt einer weiteren möglichen Ausbildungsform eines erfindungsgemäßen Antriebsstrangs 1 für ein allradgetriebenes Fahrzeug (nicht dargestellt in Fig. 3). Der in Fig. 3 gezeigte Ausschnitt des Antriebsstrangs 1 umfasst ein als Elektromotor 2 ausgebildetes Antriebsaggregat 2 sowie ein als Achsgetriebe 3 ausgebildetes Getriebe 3. Das Getriebe 3 und das Antriebsaggregat 2 sind über eine Eingangswelle 4 trieblich miteinander verbunden. Beispielsgemäß verbindet die Eingangswelle 4 das Getriebe 3 und das Antriebsaggregat 2 unmittelbar miteinander, d.h. ohne Zwischenschaltung einer weiteren Übersetzungsstufe. Eine Ausgangsdrehzahl des Antriebsaggregats 2 entspricht somit einer Eingangsdrehzahl des Getriebes 3. Das beispielsgemäß als Achsgetriebe 3 ausgebildete Getriebe 3 umfasst gemäß dem Ausführungsbeispiel der Fig. 3 eine erste Übersetzungsstufe 3', eine zweite Übersetzungsstufe 3" sowie eine Neutralposition 3"', wobei die erste und die zweite Übersetzungsstufe in Planetenbauweise ausgebildet sind. Weiterhin umfasst das Achsgetriebe eine als Differential 7 ausgebildete Untersetzungsstufe 7 zur Reduzierung der Ausgangsdrehzahl gegenüber der Eingangsdrehzahl. Das Getriebe 3 gibt dann über eine Ausgangswelle 5 nach Maßgabe der Eingangsdrehzahl und einer eingestellten Übersetzungsstufe 3', 3" sowie der Untersetzungsstufe 7 eine Ausgangsdrehzahl aus. Ein Schaltvorgang im Getriebe 3 der Fig. 3 folgt dabei den bereits beim Getriebe 3 der Fig. 1 beschriebenen Verfahrensschritten.

Fig. 4 zeigt beispielhaft und schematisch einen Ausschnitt einer weiteren möglichen Ausbildungsform eines erfindungsgemäßen Antriebsstrangs 1 für ein allradgetriebenes Fahrzeug (nicht dargestellt in Fig. 4). Der in Fig. 4 gezeigte Ausschnitt des Antriebsstrangs 1 unterscheidet sich dabei vom in Fig. 3 gezeigten Ausschnitt durch die Untersetzungsstufe 8, mittels der die Eingangsdrehzahl reduziert wird, bevor das Getriebe 3 mit der Eingangsdrehzahl beaufschlagt wird. Die Untersetzungsstufe 8 ist dabei beispielsgemäß als einstufiger Planetenradsatz ausgebildet. Im Übrigen ist der in Fig. 4 gezeigte Ausschnitt des Antriebsstrangs 1 identisch mit dem in Fig. 3 gezeigten Ausschnitt.

### Bezugszeichen

- 1: Antriebsstrang
- 2: Antriebsaggregat, Elektromotor
- 3: Getriebe, Verteilergetriebe, Achsgetriebe
- 3': erste Übersetzungsstufe
- 3": zweite Übersetzungsstufe
- 3'": Neutralposition
- 4: Eingangswelle
- 5: Ausgangswelle
- 6: mehrstufige Schaltstufe
- 7: Differential, Untersetzungsstufe
- 8: Untersetzungsstufe

## Patentansprüche

1. Verfahren zum Schalten eines Getriebes (3) aus einer ersten Übersetzungsstufe (3') in eine zweite Übersetzungsstufe (3") unter Drehzahl, wobei das Getriebe (3) von einem Antriebsaggregat (2) mit einer Eingangsdrehzahl beaufschlagt wird, wobei das Getriebe (3) nach Maßgabe der Eingangsdrehzahl und einer eingestellten Übersetzungsstufe (3', 3") eine Ausgangsdrehzahl ausgibt, wobei ein Drehmoment des Antriebsaggregats (2) zum Schalten reduziert wird, wobei das Getriebe (3) dann aus einer ersten Übersetzungsstufe (3') in eine Neutralposition (3''') geschaltet wird, wobei weiterhin eine Synchronisation der Eingangsdrehzahl mit der Ausgangsdrehzahl der zweiten Übersetzungsstufe (3") vorgenommen wird und wobei das Getriebe (3) schließlich aus der Neutralposition (3''') in die zweite Übersetzungsstufe (3") geschaltet wird, wenn die Eingangsdrehzahl mit der Ausgangsdrehzahl der zweiten Übersetzungsstufe (3") synchronisiert ist,
**dadurch gekennzeichnet, dass** die Synchronisation ausschließlich über das Antriebsaggregat (2) erfolgt.

2. Verfahren nach Anspruch 1,
**dadurch gekennzeichnet, dass** das Schalten in einem Zugbetrieb oder in einem Schubbetrieb vorgenommen wird.

3. Verfahren nach mindestens einem der Ansprüche 1 und 2,
**dadurch gekennzeichnet, dass** das Antriebsaggregat (2) elektrisch betrieben wird.

4. Verfahren nach mindestens einem der Ansprüche 1 bis 3,
**dadurch gekennzeichnet, dass** die Eingangsdrehzahl mittels einer Untersetzungsstufe (8) reduziert wird, bevor das Getriebe (3) mit der Eingangsdrehzahl beaufschlagt wird.

5. Verfahren nach mindestens einem der Ansprüche 1 bis 4,
**dadurch gekennzeichnet, dass** die Eingangsdrehzahl mittels einer mehrstufigen Schaltstufe (6) erhöht oder reduziert wird, bevor das Getriebe (3) mit der Eingangsdrehzahl beaufschlagt wird.

6. Verfahren nach Anspruch 5,
**dadurch gekennzeichnet, dass** das Getriebe (3) in Verbindung mit der Schaltstufe (6) als Gruppengetriebe verwendet wird, wobei die Schaltstufe (6) als Hauptgetriebe verwendet wird.

7. Verfahren nach mindestens einem der Ansprüche 1 bis 6,
**dadurch gekennzeichnet, dass** das Drehmoment des Antriebsaggregats (2) soweit reduziert wird, dass es einem Schleppmoment des Antriebsaggregats (2) und/oder einem Schleppmoment der Untersetzungsstufe (8) und/oder einem Schleppmoment der Schaltstufe (6) sowie einem zur Synchronisation erforderlichen Drehmoment entspricht.

8. Verfahren nach mindestens einem der Ansprüche 1 bis 7,
**dadurch gekennzeichnet, dass** das Getriebe (3) mittels einer Schaltklaue geschaltet wird.

9. Antriebsstrang (1) für ein allradgetriebenes Fahrzeug, umfassend ein als Elektromotor (2) ausgebildetes Antriebsaggregat (2) und mindestens ein Getriebe (3) mit mindestens einer ersten Übersetzungsstufe (3'), einer zweiten Übersetzungsstufe (3") und einer Neutralposition (3"'),
**dadurch gekennzeichnet, dass** der Antriebsstrang (1) dazu ausgebildet ist, ein Verfahren nach mindestens einem der Ansprüche 1 bis 8 auszuführen.

10. Antriebsstrang (1) nach Anspruch 9,
**dadurch gekennzeichnet, dass** das mindestens eine Getriebe (3) als Verteilergetriebe (3) oder Achsgetriebe (3) ausgebildet ist.

11. Allradgetriebenes Fahrzeug, umfassend einen Antriebsstrang (1) nach mindestens einem der Ansprüche 9 und 10.
